# EUROPÄISCHE PATENTANMELDUNG

(11) **EP 1 217 298 A1**
(43) Veröffentlichungstag der Anmeldung: **26.06.2002**
(21) Anmeldenummer: 00127390.3
(22) Anmeldetag: 14.12.2000
(51) Int. Cl.: F23G 7/00

(54) **Verfahren zur Verwertung von Klärschlamm aus Kläranlagen als Brennmaterial-Zusatzstoff in Verbrennungskraftwerken**

(71) Anmelder: E.ON Kraftwerke GmbH, 30457 Hannover (DE); HanseWasser Bremen GmbH, 28237 Bremen (DE)
(72) Erfinder: Bieber, Horst, 28790 Schwanewede (DE); Büchner, Harm-Peter, 27318 Hoyerhagen (DE); Könemann, Rainer, 27721 Ritterhude (DE); Fahsing, Peter, 28755 Bremen (DE)
(74) Vertreter: Stenger, Watzke & Ring Patentanwälte

(57) **Zusammenfassung**

Um ein Verfahren zur Verwertung von Klärschlamm aus Kläranlagen als Brennmaterial-Zusatzstoff in Verbrennungskraftwerken (20), bei dem der in den Kläranlagen (10) anfallende Klärschlamm entwässert und ein so gewonnener entwässerter Klärschlamm in einem Verbrennungskraftwerk zur Energieumwandlung mit verbrannt wird, dahingehend weiterzuentwickeln, daß der Aufwand des Klärschlammhandlings reduziert und die bei der Durchführung des Verfahrens sowohl kraftwerksseitig als auch kläranlagenseitig entstehenden Kosten minimiert werden, wird mit der Erfindung vorgeschlagen, daß der Klärschlamm als Dünnschlamm von einer Kläranlage (10) zu einem Verbrennungskraftwerk (20) transportiert, in dem Verbrennungskraftwerk (20) zur Gewinnung des entwässerten Klärschlammes zentrifugiert und der so gewonnene entwässerte Klärschlamm einer Mahlanlage, in welcher der Klärschlamm getrocknet und zerkleinert wird, einer Verbrennung zugeführt wird.

## Beschreibung

Die Erfindung betrifft ein Verfahren zur Verwertung von Klärschlamm aus Kläranlagen als Brennmaterial-Zusatzstoff in Verbrennungskraftwerken, bei dem der in den Kläranlagen anfallende Klärschlamm entwässert und ein so gewonnener Trockenrückstand in einem Verbrennungskraftwerk zur Energieumwandlung mit verbrannt wird.

Bei der Abwasserklärung in kommunalen bzw. industriellen Kläranlagen anfallende Klärschlämme werden neben anderen Verwertungsformen unter anderem auch als Brennmaterial-Zusatzstoffe zur Verbrennung in Verbrennungskraftwerken genutzt. Als Verbrennungskraftwerke im Sinne dieser Erfindung sind Kraftwerke zu verstehen, in denen zur Strom- oder Wärmeerzeugung brennbare Materialien verbrannt werden. Hierzu zählen beispielsweise zur Stromerzeugung oder Wärmegewinnung genutzte Müllverbrennungskraftwerke, Kohlekraftwerke, Ölkraftwerke, Erdgaskraftwerke, Biogaskraftwerke, Holzkraftwerke oder Kraftwerke, die mit anderen, hier nicht aufgeführten brennbaren Ausgangsstoffen betrieben werden. Zur Entsorgung des Klärschlammes einerseits und zur sinnvollen Nutzung durch Energieumsetzung durch Verbrennen der Klärschlämme werden die Klärschlämme dem in dem Verbrennungskraftwerk verbrannten Brennmaterial anteilig zugesetzt. Der Klärschlamm dient somit als Brennmaterial-Zusatzstoff, und beim Verbrennen des Klärschlammes wird in Form von Wärme direkt nutzbare oder zur Erzeugung von Strom genutzte Energie freigesetzt.

Die Klärschlämme fallen dabei in den Kläranlagen zunächst in Form von sogenannten Dünnschlämmen mit hohem Wasseranteil an. Um den Klärschlamm einer Verbrennung zuführen zu können, muß der sogenannte Dünnschlamm zunächst entwässert werden. Die entwässerten Klärschlämme können dann einer Verbrennung zugeführt werden.

Bei einer bekannten, gattungsgemäßen Verwertung des Klärschlamms wird dabei wie folgt vorgegangen: Der in der Kläranlage anfallende Dünnschlamm wird vor Ort in der Kläranlage mechanisch entwässert. Die Entwässerung wird dabei beispielsweise in klärwerkseigenen Zentrifugen oder Kammerfilterpressen vorgenommen. Das beim Entwässern frei gewordene Restwasser wird in die Kläranlage zurückgeführt, und der durch das Entwässern gewonnene entwässerte Klärschlamm wird in der Kläranlage zwischengelagert. Der in den Lagerbehältnissen der Kläranlage angesammelte entwässerte Klärschlamm wird dann in Abständen zu einem Kraftwerk transportiert. Dies geschieht üblicherweise per Straßentransport mittels Lastkraftwagen. In den Kraftwerken werden die entwässerten Klärschlämme von den Lastkraftwagen in speziellen, geschlossenen Entladestationen entladen und in Speicherbehälter gefördert. Aus den Speicherbehältern werden die entwässerten Klärschlämme schließlich über Verteilersysteme in zu Mahlanlagen gehörige Dosierbehälter gefördert. Aus den Dosierbehältern wird der entwässerte Klärschlamm in die Mahlanlagen gegeben und darin getrocknet und zerkleinert. Der zerkleinerte, getrocknete Klärschlamm wird schließlich anteilig dem Brennmaterial des Verbrennungskraftwerks beigemischt und im Kraftwerk mit verbrannt.

Bei dem bekannten und derzeit praktizierten System ist es notwendig, daß die Kläranlage die Klärschlämme selbst entwässert. Hierzu müssen in den Kläranlagen entsprechende Entwässerungsvorrichtungen aufgestellt, betrieben und gewartet werden. Des weiteren erfordert die geschilderte Form der Klärschlammverwertung ein umfangreiches Handling des Klärschlamms, wobei teilweise eine mehrfache Umsetzung vorgenommen werden muß. Auch sind in den Kläranlagen entsprechende Lagermöglichkeiten für die Zwischenlagerung der Klärschlämme bereitzustellen.

Der im Zusammenhang mit den bekannten Verfahren praktizierte Transport über den Straßenverkehr mit Lastkraftwagen erfordert ein hohes Transportaufkommen, und durch die LKW-Transporte ist die Anwendung des Verfahrens aus ökonomischer und ökologischer Sicht auf den regionalen Einsatz um das Kraftwerk herum beschränkt.

Schließlich sind die in den Kraftwerken erforderlichen Entladestationen sowie die Speicherbehälter für die entwässerten Klärschlämme in ihrer Errichtung und in ihrem Betrieb kostspielig, was einen hohen finanziellen Aufwand für die Errichtung und Unterhaltung dieser Einrichtungen nach sich zieht.

Ausgehend von diesem Stand der Technik ist es **Aufgabe** der Erfindung, ein Verfahren der eingangs genannten Art anzugeben, welches den Aufwand des Klärschlammhandlings reduziert und die bei der Durchführung des Verfahrens sowohl kraftwerksseitig als auch kläranlagenseitig entstehenden Kosten minimiert.

Zur **Lösung** der Aufgabe wird mit der Erfindung für ein Verfahren der eingangs genannten Art vorgeschlagen, daß der Klärschlamm als Dünnschlamm von einer Kläranlage zu einem Verbrennungskraftwerk transportiert, in dem Verbrennungskraftwerk entwässert und der so gewonnene entwässerte Klärschlamm einer Verbrennung zugeführt wird.

Im Gegensatz zu bekannten Verfahren wird bei dem erfindungsgemäßen Verfahren der der Kläranlage entnommene Klärschlamm direkt als vorzugsweise pumpfähiger Dünnschlamm mit hohem Wasseranteil zu dem Verbrennungskraftwerk transportiert und erst vor Ort in dem Verbrennungskraftwerk zur Gewinnung des Trockenrückstandes entwässert. Durch diese Maßnahme entfällt die Notwendigkeit, in den einzelnen Klärwerken Vorrichtungen zum Entwässern des Klärschlamms vorzusehen. Es ist hierbei lediglich notwendig, zentral in den Verbrennungskraftwerken, die eine verfahrensgemäße Verwertung von Klärschlämmen vornehmen, Entwässerungsvorrichtungen vorzusehen. Somit müssen nicht mehr Entwässerungsvorrichtungen für eine Vielzahl von zur Durchführung des Verfahrens mit einem einzigen Kraftwerk kooperierenden Kläranlagen Entwässerungsvorrichtungen errichtet und unterhalten werden, sondern es ist lediglich eine, ggf. auch mehrere, zentrale Entwässerungsvorrichtungen am Ort des Verbrennungskraftwerkes vorzusehen. Hierdurch können die Gesamtkosten zur Errichtung und Unterhaltung der Entwässerungsvorrichtungen deutlich verringert werden. Zudem kann zum Betrieb der Entwässerungsvorrichtung am Ort des Verbrennungskraftwerks direkt die im Verbrennungskraftwerk umgesetzte Energie genutzt werden. Hierbei ist eine günstige Energieausnutzung zum einen aufgrund kurzer Energieübertragungswege und zum anderen aufgrund einer zeitlichen Abstimmung des Energieeinsatzes in Zeitintervallen, in denen ohnehin ein Überschuß an umgesetzter Energie in dem Verbrennungskraftwerk vorliegt, möglich.

Mit einem weiteren Merkmal der Erfindung wird vorgeschlagen, daß das bei der Entwässerung des Dünnschlamms im Verbrennungskraftwerk anfallende Restwasser zu einer Kläranlage, vorzugsweise zu einer Kläranlage, deren Dünnschlamm in dem Kraftwerk verwertet wird, zurückgeführt wird. Durch diese Maßnahme wird das aus dem Dünnschlamm extrahierte Wasser auf umweltgerechte Weise erneut einer Klärung zugeführt, und kann nach Verlassen des Klärwerkes in den normalen Wasserkreislauf zurückgegeben werden.

Zur Vereinfachung des Transportes des Dünnschlammes bzw. des Restwassers wird mit einem weiteren Merkmal der Erfindung vorgeschlagen, daß der Dünnschlamm und/oder das Restwasser zumindest entlang eines Abschnittes der Transportstrecke zwischen dem Verbrennungskraftwerk und der Kläranlage in einer Rohrleitung transportiert wird. Eine Rohrleitung erfordert zwar zu deren Errichtung eine einmalige Investition, sie kann jedoch nachfolgend zum Transportieren der angegebenen Stoffe vergleichsweise kostengünstig und umweltschonend betrieben werden. Eine Rohrleitung zwischen einer an dem Verfahren beteiligten Kläranlage und einem solchen Kraftwerk ist dabei bevorzugt bis zu Entfernungen von etwa 15 Kilometern lohnend einsetzbar. Im Falle eines Transports durch eine Rohrleitung kann der in der Kläranlage abgezogene Dünnschlamm direkt durch die Rohrleitung zum Kraftwerk transportiert und dort gegebenenfalls einer zentralen Zwischenlagerung zugeführt werden. Auf umgekehrtem Wege kann durch dieselbe Rohrleitung oder aber durch eine weitere Rohrleitung das in dem Verbrennungskraftwerk beim Entwässern des Dünnschlammes anfallende Restwasser der an das Rohrleitungssystem angeschlossenen Kläranlage zur weiteren Klärung zugeführt werden.

Zur Überbrückung größerer Entfernungen wird gemäß einem weiteren Merkmal der Erfindung vorgeschlagen, daß der Dünnschlamm und/oder das Restwasser zumindest entlang eines Abschnittes der Transportstrecke zwischen dem Verbrennungskraftwerk und der Kläranlage mit einem Schiff transportiert wird. Hierzu wird der Transport über Binnengewässer bevorzugt, wobei sowohl der Dünnschlamm als auch das Restwasser zwischen der jeweils zum Verbrennungskraftwerk bzw. zur Kläranlage nächstgelegene Be- und Entladestelle für die Schiffe über Rohrleitungen transportiert werden kann. Ist ein Verbrennungskraftwerk oder eine Kläranlage nicht in für den Aufbau einer Rohrleitung lohnender Entfernung zu einem schiffbareren Gewässer gelegen, so können der Dünnschlamm bzw. das Restwasser gegebenenfalls per Lastkraftwagen zur nächstgelegenen Be- und Entladestelle für Transportschiffe gebracht werden. Bei Einsatz eines Schiffes zum Transport des Klärschlammes kann auch auf dem Gelände der Kläranlage eine Teilentwässerung erfolgen. Damit wird der Klärschlamm soweit entwässert, dass er noch mit konventionellen Pumpen pumpfähig ist und nicht mit speziellen Dickstoffpumpen gefördert werden muss. Über diese Regelung wird bei wirtschaftlichem Optimum in den Aufwendungen für die Fördertechnik auch das wirtschaftliche Optimum für den Schiffstransport erreicht.

Für die mit einem weiteren Merkmal der Erfindung vorgeschlagene Zwischenlagerung des Dünnschlammes und/oder des Restwassers in dem Verbrennungskraftwerk wird die Verwendung von Tanks oder Becken, die evtl. ohnehin in den Verbrennungskraftwerken vorhanden sind, bevorzugt.
Das Entwässern des Dünnschlammes wird gemäß einem weiteren Merkmal der Erfindung mechanisch, vorzugsweise durch Zentrifugieren, durchgeführt. Die Leistung der Zentrifuge wird dabei bevorzugtermaßen automatisch und bedarfsabhängig geregelt. Gemäß einem weiteren Merkmal der Erfindung wird der durch Entwässern des Dünnschlammes gewonnene entwässerte Klärschlamm im Verbrennungskraftwerk vor dem Verbrennen getrocknet und zerkleinert. Das Trocknen und vorzugsweise gleichzeitige Zerkleinern des entwässerten Klärschlamms kann dabei in den ohnehin in den Verbrennungskraftwerken vorhandenen Mahlanlagen durchgeführt werden. Dabei wird der gewonnene Trockenrückstand vorzugsweise zu Teilen derartiger Größe zerkleinert, wie sie für die Verbrennung in dem jeweiligen Verbrennungskraftwerk geeignet ist.

Schließlich wird mit der Erfindung vorgeschlagen, daß der Klärschlamm in dem Verbrennungskraftwerk bis zur Verbrennung des Trockenrückstandes in einem geschlossenen System verarbeitet wird. Auf diese Weise kann sichergestellt werden, daß in dem Klärschlamm enthaltene Substanzen nicht unnötig freigesetzt werden. Weiterhin wird der betriebliche Aufwand gering gehalten, dadurch daß der Klärschlamm das geschlossene System nicht verläßt. Eine Umsetzung des Klärschlamms von einem System in ein anderes System ist nicht erforderlich.

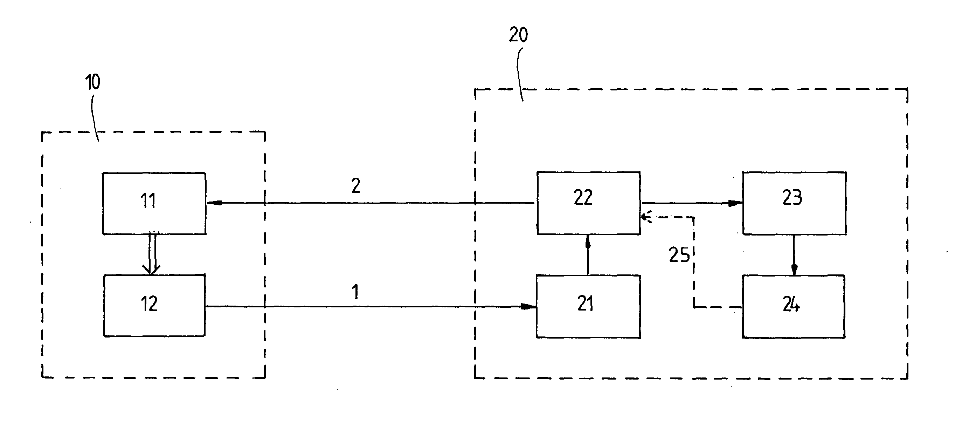

Weitere Merkmale und Vorteile der Erfindung ergeben sich aus der nachfolgenden Beschreibung eines Ausführungsbeispiels anhand der beigefügten Figur.

Die Figur zeigt dabei schematisch den Ablauf eines Ausführungsbeispiels des erfindungsgemäßen Verfahrens. In der Figur durch gestrichelte Linien umrissen dargestellt ist eine Kläranlage 10. Diese weist ein oder mehrere Klärbecken 11 auf, in denen Klärschlamm sedimentiert, welcher in einem Klärschlammsammelbecken 12 abgefangen wird. Das Klärschlammsammelbecken ist über einen Transportweg 1 mit einem Lagerbehälter 21, welcher Bestandteil eines durch gestrichelte Linien umrissenen Verbrennungskraftwerks 20 ist, verbunden. Dem Lagerbehälter 21 nachgeschaltet findet sich eine Entwässerungsvorrichtung 22, welche wiederum über einen Transportweg 2 mit dem Klärbecken 11 des Klärwerks 10 verbunden ist. Ein weiterer Ausgang aus der Entwässerungsvorrichtung führt zu einer Mahlanlage 23. Diese schließlich ist mit einer Brennkammer 24 des Kraftwerks 20 verbunden. Ein gestrichelter Pfeil 25 deutet die Energieversorgung der Entwässerungsvorrichtung 22 mit in der Brennkammer 24 freigesetzter Energie an. Dabei kann die Energie selbstverständlich mittels der in der Brennkammer 24 gewonnenen Wärme über bekannte Vorrichtungen erzeugter Strom sein.

Im gezeigten Ausführungsbeispiel des Verfahrens wird in dem Klärschlammsammelbecken sedimentierter Klärschlamm als Dünnschlamm über den Transportweg 1 einem Lagerbehälter 21 in dem Kraftwerk 20 zugeführt. Der Transportweg 1 kann dabei durch ein Rohrleitungssystem oder aber durch zumindest teilweisen Schiffsverkehr gebildet sein. Es liegt ebenfalls im Rahmen der Erfindung, daß der Transportweg 1 zumindest teilweise von Lastkraftfahrzeugen auf der Straße oder aber mit Schienenverkehr bewältigt wird. Aus dem Lagerbehälter in dem Kraftwerk wird der Dünnschlamm einer Entwässerungsvorrichtung 22, beispielsweise einer Zentrifuge zugeführt. In dieser Entwässerungsvorrichtung 22 wird der Dünnschlamm in entwässerten Klärschlamm sowie Restwasser getrennt, wobei das Restwasser über den Transportweg 2 dem oder den Klärbecken 11 der Kläranlage 10 wieder zugeführt wird. Der Transportweg 2 kann dabei ebenso wie der Transportweg 1 durch ein Rohrleitungssystem oder aber durch einen Schiffsverkehr gebildet sein. Ebenso sind im Falle des Transportweges 2 Lastkraftfahrzeuge oder schienengebundene Transportmittel zum Transport des Restwassers möglich. Der entwässerte Klärschlamm verläßt die Entwässerungsvorrichtung 22 zu einer Mahlanlage 23, in welcher der entwässerte Klärschlamm getrocknet und auf eine verbrennungsgerechte Größe zerkleinert wird. Aus der Mahlanlage 23 gelangt der zerkleinerte Trockenrückstand schließlich in die Brennkammer 24, wo der Trockenrückstand als Brennmaterial-Zusatzstoff gemeinsam mit dem primär verwendeten Brennmaterial des Verbrennungskraftwerks 20 verbrannt wird. Das Verbrennungskraftwerk 20 kann dabei irgendeines der eingangs genannten Verbrennungskraftwerke sein, wobei ein Kohlekraftwerk eine bevorzugte Anwendungsform eines Verbrennungskraftwerkes bildet. Für die Anwendung des erfindungsgemäßen Verfahrens ist es dabei unerheblich, ob das Verbrennungskraftwerk 20 lediglich zur Erzeugung von Wärme, beispielsweise Fernwärme, oder auch zur Weiterverarbeitung der gewonnenen Wärme zu Strom genutzt wird. Mit dem Pfeil 25 ist angedeutet, daß die zum Betrieb der Entwässerungsvorrichtung benötigte Energie aus der in der Brennkammer 24 umgesetzten Energie bzw. aus deren Folgeprodukten entnommen werden kann.

Selbstverständlich ist das erfindungsgemäße Verfahren nicht auf den hier dargestellten Fall beschränkt, daß das beim Entwässern des Dünnschlammes in der Entwässerungsvorrichtung 22 des Kraftwerks 20 gewonnene Restwasser dem Klärwerk, aus dem der Dünnschlamm stammt, wieder zugeführt wird. Es liegt ebenfalls im Rahmen der Erfindung, daß das Restwasser einem anderen Klärwerk als dem Klärwerk, welches den zugehörigen Dünnschlamm geliefert hat, zugeführt wird.

Mit dem erfindungsgemäßen Verfahren ist ein gegenüber herkömmlichen Verfahren zur Verwertung von Klärschlamm aus Kläranlagen als Brennmaterial-Zusatzstoff in Verbrennungskraftwerken einfacheres und kostengünstiger durchführbares Verfahren angegeben, welches die Unzulänglichkeiten des Standes der Technik vermeidet.

### Bezugszeichenliste

- 1: Transportweg
- 2: Transportweg
- 10: Kläranlage
- 11: Klärbecken
- 12: Klärschlammsammelbecken
- 20: Verbrennungskraftwerk
- 21: Lagerbehälter
- 22: Entwässerungsvorrichtung
- 23: Mahlanlage
- 24: Brennkammer
- 25: Pfeil

## Patentansprüche

1. Verfahren zur Verwertung von Klärschlamm aus Kläranlagen (10) als Brennmaterial-Zusatzstoff in Verbrennungskraftwerken (20), bei dem der in den Kläranlagen (10) anfallende Klärschlamm entwässert und ein so gewonnener entwässerter Klärschlamm in einem Verbrennungskraftwerk (20) zur Energieumwandlung mit verbrannt wird,
**dadurch gekennzeichnet,**
**daß** der Klärschlamm als Dünnschlamm von einer Kläranlage (10) zu einem Verbrennungskraftwerk (20) transportiert, in dem Verbrennungskraftwerk (20) entwässert und der so gewonnene entwässerte Klärschlamm einer Verbrennung zugeführt wird.

2. Verfahren nach Anspruch 1, **dadurch gekennzeichnet, daß** das bei der Entwässerung des Dünnschlamms im Verbrennungskraftwerk (20) anfallende Restwasser zu einer Kläranlage (10) vorzugsweise zu einer Kläranlage, deren Dünnschlamm in dem Verbrennungskraftwerk verwertet wird, zugeführt wird.

3. Verfahren nach einem der Ansprüche 1 oder 2, **dadurch gekennzeichnet, daß** der Dünnschlamm und/oder das Restwasser zumindest entlang eines Abschnittes der Transportstrecke (1, 2) zwischen dem Verbrennungskraftwerk (20) und der Kläranlage (10) in einer Rohrleitung transportiert wird.

4. Verfahren nach einem der Ansprüche 1 bis 3, **dadurch gekennzeichnet, daß** der Dünnschlamm und/oder das Restwasser zumindest entlang eines Abschnittes der Transportstrecke (1, 2) zwischen dem Verbrennungskraftwerk und der Kläranlage mit einem Schiff transportiert wird.

5. Verfahren nach einem der Ansprüche 1 bis 4, **dadurch gekennzeichnet, daß** der Dünnschlamm und/oder das Restwasser in dem Verbrennungskraftwerk (20) vor der Weiterverarbeitung gelagert wird.

6. Verfahren nach einem der Ansprüche 1 bis 5, **dadurch gekennzeichnet, daß** der Dünnschlamm in dem Verbrennungskraftwerk mechanisch, vorzugsweise durch Zentrifugieren, entwässert wird.

7. Verfahren nach einem der Ansprüche 1 bis 6, **dadurch gekennzeichnet, daß** der durch Entwässern des Dünnschlammes gewonnene entwässerte Klärschlamm im Verbrennungskraftwerk (20) vor dem Verbrennen getrocknet und zerkleinert wird.

8. Verfahren nach einem der Ansprüche 1 bis 7, **dadurch gekennzeichnet, daß** der Klärschlamm in dem Verbrennungskraftwerk (20) bis zur Verbrennung des entwässerten Klärschlammes in einem geschlossenen System verarbeitet wird.
